# FASCICULE DE BREVET EUROPEEN

(11) **EP 2 870 902 B1**
(45) Date de publication et mention de la délivrance du brevet: **15.05.2019**
(21) Numéro de dépôt: 14192096.7
(22) Date de dépôt: 06.11.2014
(51) Int. Cl.: A47J 43/07, B01F 7/00, B01F 3/08

(54) **Outil émulsionneur agitateur pour mixeur et mixeur plongeant equipé d'un tel outil**
Emulgier- und Rührwerkzeug für Mischer, und mit einem solchen Werkzeug ausgerüsteter Tauchmischer
Emulsifier-stirrer tool for blender and hand-held blender provided with such a tool

(30) Priorité: 08.11.2013 FR 1360984
(43) Date de publication de la demande: 13.05.2015
(73) Titulaire: Hameur S.A., 2412 Luxembourg (LU)
(72) Inventeur: Calange, Yves, 71305 Montceau en Bourgogne (FR)
(74) Mandataire: Cornuejols, Georges

(56) Documents cités:
- EP-A1- 2 659 812
- FR-A1- 2 927 520
- GB-A- 1 401 508
- JP-A- 2007 083 223
- NL-A- 8 402 226
- US-A- 5 615 951
- US-A1- 2007 152 357
- US-A1- 2008 128 529
- US-A1- 2011 211 419

## Description

### Domaine de l'invention

L'invention concerne un outil émulsionneur agitateur destiné à être monté sur un mixeur plongeant pour assurer un brassage d'aliments à émulsionner ou à transformer en mousse très légère.

L'invention concerne également un mixeur plongeant équipé d'un tel outil émulsionneur agitateur.

L'invention trouve des applications dans le domaine culinaire, professionnel ou domestique, pour le brassage d'aliments en émulsions et, plus particulièrement, pour la préparation de mousses légères et aérées.

### Etat de la technique

Dans le domaine culinaire, les fabricants d'appareils de traitement d'aliments ont développé depuis quelques années de nombreux appareils destinés à faciliter le travail des ménagères et/ou des professionnels de la cuisine. Ils ont notamment développé :
- des outils, appelés mélangeurs, permettant de mélanger deux ou plusieurs produits. Ces mélangeurs permettent l'obtention d'un mélange homogène où les différents produits sont combinés les uns avec les autres pour former un seul produit final. Ces mélangeurs n'intègrent pas d'air au sein du mélange. Or, les cuisiniers actuels cherchent à réaliser des mousses légères et aérées. Pour obtenir de telles mousses, le cuisinier doit intégrer de l'air au sein d'une petite quantité d'un produit liquide afin que des bulles se créent dans le liquide. Plus la quantité d'air intégrée dans le liquide est élevée et plus la mousse est aérée et légère. Cette mousse est généralement déposée en petite quantité, dans une assiette ou un contenant, sur les ingrédients afin d'apporter une touche esthétique à l'ensemble.
- des outils appelés "fouets" intégrés dans la cuve d'un appareil de type blender ou robot pour réaliser des mousses. Des exemples de tels outils sont décrits notamment dans les documents EP 2099555, US 2003/0053838 et US 7967497. Ces outils sont fixés dans un bol et sont donc figés par la conception de l'appareil. L'utilisateur ne peut donc intervenir sur le mouvement imprégné à l'outil. Le cuisinier ne peut donc introduire de l'air au sein de la préparation pour la transformer en mousse.

- Pour réaliser ces mousses, les cuisiniers professionnels utilisent préférentiellement des mixers, équipés soit du couteau soit du disque batteur. En effet, les mixers sont déplacés par l'utilisateur au sein de la préparation, ce qui permet une intégration d'air dans ladite préparation. Cependant, ces mixers, équipés de couteaux ou de batteurs ne donnent pas entière satisfaction aux cuisiniers car les formes des outils ne sont pas appropriées pour ce travail et cassent les bulles d'air.

Les mousses, obtenues avec les appareils décris ci-dessus, sont donc de qualité moyenne : bulles peu aérées et avec une tenue limitée dans le temps. Elles doivent donc être préparées, en petite quantité, juste avant de les déposer dans l'assiette (action appelée dans les cuisines : préparation minute). Ces types d'émulsions étant réalisées juste avant de servir une assiette, la rapidité d'exécution est donc très importante

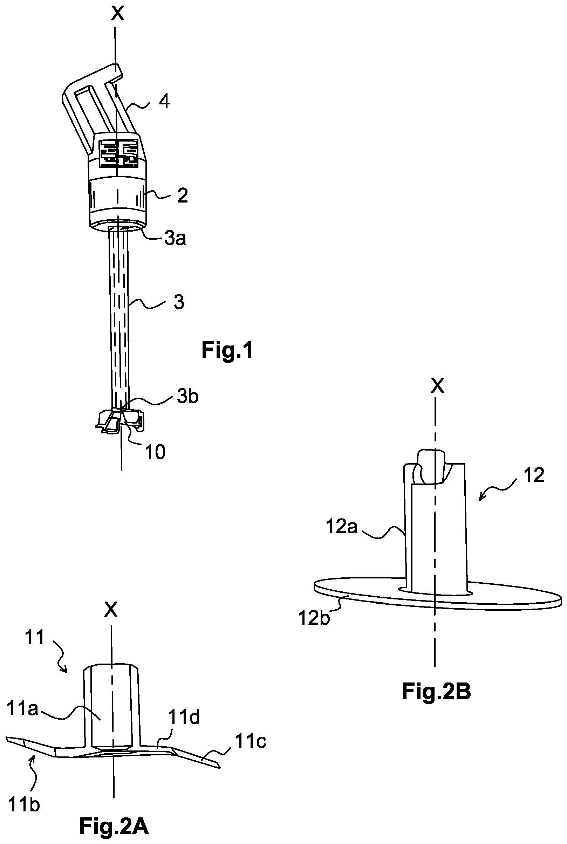

Un exemple d'un mixeur plongeant équipé d'un outil classique est représenté sur la figure 1. Ce mixeur plongeant est un appareil portatif comportant un bloc-moteur sur lequel est fixé un pied d'entraînement supportant un outil de travail rotatif. Dans ces appareils, le mouvement imprégné à l'outil, monté sur le mixer, est déterminé par l'utilisateur en fonction de la préparation et du résultat souhaité. Le mixer étant indépendant du contenant, il offre une liberté de déplacement de l'outil. Ce mixeur plongeant 1 comporte un bloc-moteur 2, un pied d'entraînement 3 et un outil rotatif 10 de travail de l'aliment, appelé outil rotatif, recouvert par une protection appelée cloche.

Le bloc moteur 2 peut comporter une poignée 4 assurant une bonne prise en main par l'utilisateur. Le pied d'entraînement 3 comporte un tube, en métal ou en plastique, traversé par un arbre d'entraînement positionné suivant l'axe X. Cet arbre d'entraînement est relié, par une extrémité supérieure 3a, au bloc moteur 2 qui assure son entraînement en rotation. Il est relié, par une extrémité inférieure 3b, à l'outil rotatif 10. Le pied d'entraînement 3 et l'outil rotatif 10 sont destinés à être plongés dans la préparation d'aliments à traiter sur une longueur maximale correspondant à environ deux tiers de la longueur totale, l'outil rotatif 10 étant totalement ou partiellement immergé dans la préparation alimentaire. En immergeant partiellement l'outil dans la préparation, le cuisinier peut donc introduire de l'air dans sa préparation pour la transformer en mousse.

L'outil rotatif 10 est généralement amovible. Ainsi, différents outils rotatifs peuvent être montés sur le pied d'entraînement en fonction du traitement à faire subir à la préparation d'aliments. L'outil rotatif peut être, par exemple, un outil couteau pour hacher un aliment, un outil batteur pour fouetter un aliment ou encore un outil émulsionneur agitateur pour émulsionner ou transformer une préparation en mousse.

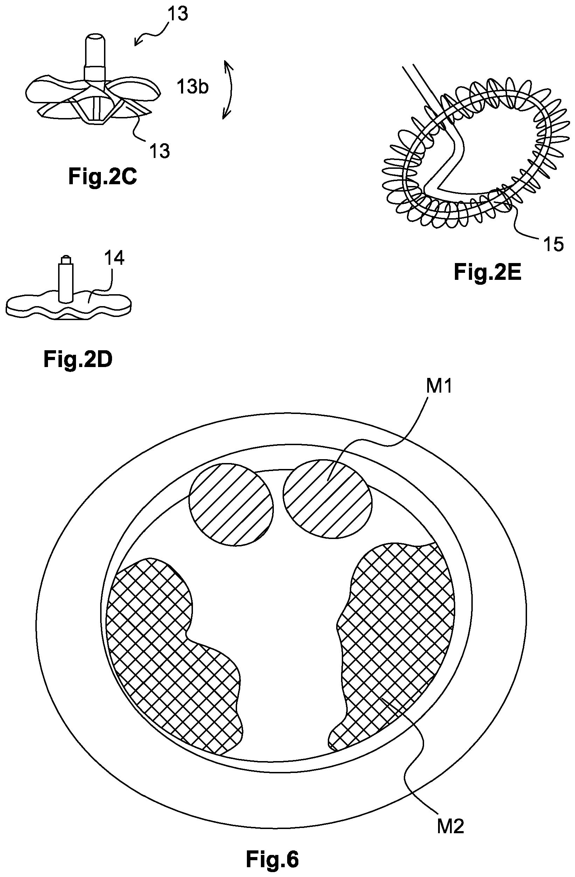

Un exemple d'un outil couteau 11, classique, est représenté sur la figure 2A. Des exemples d'outils batteur 12, 13, 14 et 15 classiques sont représentés sur les figures 2B, 2C, 2D et 2E. Comme on le voit sur ces figures, les outils rotatifs comportent généralement une embase 11a, 12a de forme adaptée pour être fixée sur le pied d'entraînement 3. Cette embase 11a, 12a supporte un moyen de travail de l'aliment. Dans le cas d'un outil couteau 11, le moyen de travail est une lame 11b (figure 1). Dans le cas d'un outil batteur 12, 13 ou 14, le moyen de travail est un disque d'agitation simple 12b (figure 2B) ou découpé en forme d'hélice 13b libre en rotation (suivant la flèche représentée sur la figure 2C) ou en forme ondulée 14b (figure 2D) ou encore sous la forme d'une couronne 15b équipée d'un ressort (figure 2E).

Classiquement, dans un mixeur plongeant, le moyen de travail de l'outil rotatif, quel qu'il soit, a sa surface perpendiculaire à l'axe de rotation X dudit outil. Dans le cas de l'outil couteau 11, la surface 11d de la lame 11b est perpendiculaire à l'axe de rotation X. Toutefois, cette surface 11d de la lame ne constitue pas la face de travail de l'outil, c'est-à-dire qu'elle n'est pas la face de l'outil qui est en contact avec l'aliment pour travailler ledit aliment. Dans un outil couteau, c'est le champ 11c de la lame 11b qui constitue la face de travail. Ce champ 11c forme le fil de la lame 11b qui assure l'effet tranchant dudit outil. Ainsi, dans le cas d'un outil couteau, plus la face de travail dudit outil couteau est fine, c'est-à-dire de faible dimension, plus l'effet tranchant est efficace et plus le temps de travail pour hacher l'aliment est court.

Au contraire, dans le cas d'un outil batteur 12, 13 ou 14, la face de travail de l'outil est la surface 12b, 13b, 14b du disque d'agitation. Or, cette surface 12b, 13b, 14b est quasi perpendiculaire à l'axe de rotation X. C'est uniquement la légère inclinaison de cette surface par rapport audit axe de rotation X (cas des batteurs 12 et 13 -14) ou l'apport d'un ressort autour du disque ou d'une couronne situé dans le plan perpendiculaire à l'axe de rotation X (cas du batteur 15) qui permet de brasser la préparation alimentaire. La zone d'un outil batteur classique qui travaille réellement l'aliment est donc petite par rapport à la surface du disque d'agitation. Le temps de travail pour obtenir une émulsion avec un tel outil batteur est donc relativement long, avec un résultat moyen.

Or, actuellement, les cuisiniers, qu'ils soient professionnels ou amateurs, veulent obtenir une émulsion ou une mousse parfaite le plus rapidement possible, une mousse parfaite étant une mousse très aérée et ferme, capable de rester sous forme de mousse plusieurs minutes sans se liquéfier. Un exemple d'une mousse de grande qualité M1 est représentée sur la figure 6, à coté d'une mousse de basse qualité M2 : la mousse de basse qualité M2 est liquéfiée après 1,30 minute tandis que la mousse de bonne qualité M1 a conservé sa consistance initiale.

Il existe donc un besoin d'un outil émulsionneur agitateur efficace qui assure une émulsion ou une mousse de grande qualité en un temps minimum.

La demande de brevet français numéro FR 2927520 divulgue un appareil de préparation culinaire comportant un récipient et une partie motorisée comprenant l'outil de travail rotatif qui présente un organe de mélange et un organe de coupe agencé entre une paroi de support d'axe et l'organe de mélange.

La demande de brevet américain numéro US 2008/128529 divulgue une paille pour boissons comportant des pales radiales ajourées afin de permettre un mélange d'un liquide.

La demande de brevet américain numéro US 2011/211419 divulgue un dispositif comportant un arbre et un élément perpendiculaire à l'arbre ajouré afin de mélanger du ciment ou des matériaux de construction.

### Exposé de l'invention

L'invention a justement pour but de remédier aux inconvénients des outils décrits précédemment. A cette fin, l'invention propose un outil émulsionneur agitateur ayant une large face de travail permettant d'obtenir rapidement une émulsion ou une mousse de qualité. Pour cela, la face de travail de l'outil émulsionneur agitateur de l'invention est située dans un plan parallèle au plan contenant l'axe de rotation de l'outil, ces deux plans pouvant être confondus.

De façon plus précise, l'invention concerne un outil émulsionneur agitateur pour appareil de préparation alimentaire selon la revendication 1.

L'outil émulsionneur agitateur de l'invention peut comporter une ou plusieurs des caractéristiques suivantes:
- les faces de travail de la pale d'agitation sont planes,
- les faces de travail de la pale d'agitation sont ondulées (non planes),
- les faces de travail de la pale d'agitation sont incurvées.

L'invention concerne également un mixeur plongeant pour préparation alimentaire comportant :
- un outil rotatif de travail de la préparation alimentaire,
- un pied d'entraînement traversé par un axe de rotation et sur lequel est monté de façon solidaire l'outil rotatif, et
- un bloc moteur configuré pour entraîner l'arbre du pied d'entraînement en rotation.

Ce mixeur se caractérise par le fait que l'outil rotatif est un outil émulsionneur agitateur tel que décrit précédemment.

Ce mixeur plongeant peut comporter une ou plusieurs des caractéristiques suivantes :
- le pied d'entraînement comporte, à une extrémité inférieure, un embout en forme de cloche entourant au moins partiellement l'outil émulsionneur agitateur pour protéger ledit outil,
- la pale d'agitation a des dimensions proches des dimensions internes de l'embout en forme de cloche et/ou
- le bloc moteur est configuré pour entraîner l'arbre du pied d'entraînement à une vitesse variant d'environ 100 à 12000 tr/min.

### Brève description des dessins

La figure 1, déjà décrite, représente un mixeur plongeant classique.
Les figures 2A, 2B, 2C, 2D et 2E représentent des exemples d'outils rotatifs classiques pouvant être montés sur le mixeur de la figure 1.
La figure 3 représente un mixeur plongeant équipé d'un outil émulsionneur agitateur selon l'invention.
La figure 4 représente une vue de dessous du pied d'entraînement de la figure 4.
La figure 5 représente une vue de face d'un mode de réalisation de l'outil émulsionneur agitateur de l'invention.
La figure 6 représente un exemple de mousse que l'outil émulsionneur agitateur de l'invention permet d'obtenir.

### Description détaillée de modes de réalisation de l'invention

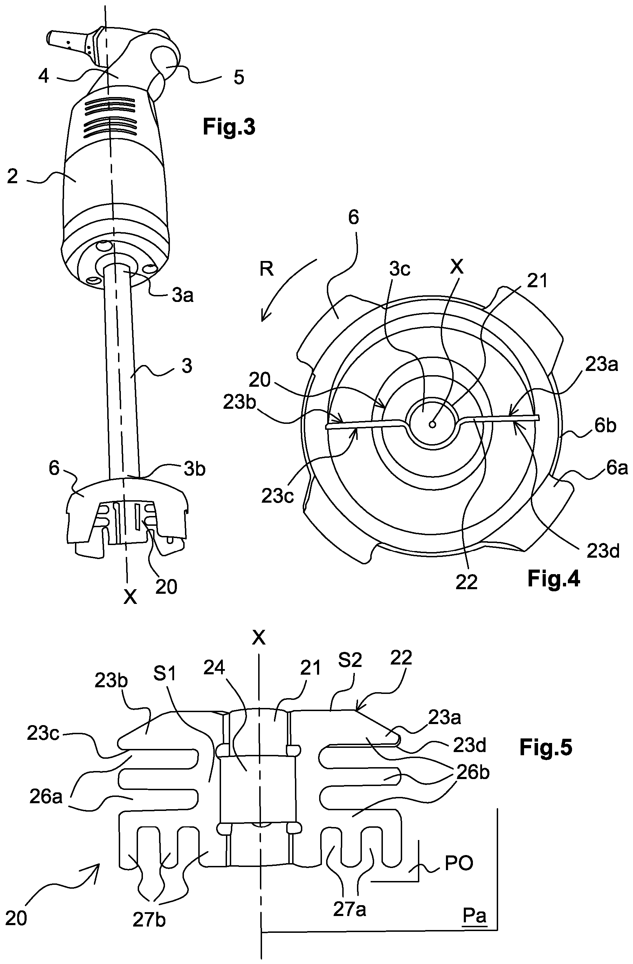

L'invention concerne un outil émulsionneur agitateur ayant une large face de travail permettant de malaxer, brasser, mélanger ou émulsionner une grande quantité de préparation alimentaire à chaque rotation dudit outil émulsionneur agitateur. Cet outil émulsionneur agitateur est adapté pour être monté sur un mixeur plongeant. Un exemple d'un tel mixeur plongeant est représenté sur la figure 3.

Ce mixeur plongeant 1 comporte un bloc-moteur 2, un pied d'entraînement 3 et un outil émulsionneur agitateur 20. Le bloc moteur 2 peut comporter une poignée 4 assurant une bonne prise en main par l'utilisateur. Cette poignée 4 est équipée d'un interrupteur de marche/arrêt 5. Le pied d'entraînement 3 comporte un tube, en métal ou en plastique, traversé par un arbre d'entraînement positionné suivant l'axe X. Cet arbre d'entraînement 3c, non visible sur la figure 3, est relié, par son extrémité supérieure 3a, au bloc moteur 2 qui assure son entraînement en rotation. Il est relié, par son extrémité inférieure 3b, à l'outil émulsionneur agitateur 20. A cette extrémité inférieure 3b, le pied d'entraînement 3 se termine par un embout 6 en forme de cloche, au centre duquel est monté l'outil émulsionneur agitateur 20. L'embout 6, appelé aussi cloche, est positionné à l'extrémité inférieure du mixeur plongeant 1 pour protéger aussi bien l'outil émulsionneur agitateur 20 que le récipient contenant la préparation d'aliments. En effet, l'embout 6 permet d'éviter que l'outil émulsionneur agitateur 20 ne touche le fond ou la paroi du récipient, ce qui permet de travailler la préparation proche du fond et de la paroi du récipient, les bords de l'outil étant eux mêmes proches de la paroi interne de la cloche 6.

Pour une préparation de mousse, il est nécessaire d'incorporer de l'air dans la préparation. Pour faciliter cette intégration d'air, la cloche et l'outil ne sont que partiellement immergés. Dans ce cas, la cloche a pour effet d'interdire les projections ou éclaboussures hors du récipient.

La cloche 6 avec ses créneaux 6a, 6b, associée à l'outil 20, a également pour effet de créer une aspiration qui augmente l'agitation de la préparation et l'intégration de l'air dans celle-ci.

Comme montré sur la figure 3 et sur la figure 4, l'outil émulsionneur agitateur 20 est monté au centre de l'embout en forme de cloche 6, à l'extrémité de l'arbre d'entraînement 3c. L'outil émulsionneur agitateur 20 étant monté solidaire de cet arbre d'entraînement 3c, il peut être entraîné dans un mouvement de rotation R autour de l'axe X par le bloc moteur 2, via l'arbre d'entraînement 3c. De par ces formes, l'outil peut tourner soit dans le sens horaire, soit dans le sens anti horaire.

Un mode de réalisation de l'outil émulsionneur agitateur 20 est représenté sur les figures 4 et 5. Cet outil émulsionneur agitateur 20, réalisé en plastique ou en métal, comporte une pale d'agitation 22 montée autour d'une embase 21. Cette pale d'agitation 22 peut avoir une hauteur approximativement égale à la hauteur de l'embase 21. Ainsi, toute la partie tournante de l'outil émulsionneur agitateur 20 constitue la surface de travail en contact avec la préparation alimentaire. Cette pale d'agitation 22 a des dimensions proches des dimensions internes de la cloche 6 de sorte que les bords de ladite pale 22 soient proches de la paroi interne de la cloche 6, ce qui assure le brassage de tout le volume de la préparation qui se trouve à l'intérieur de la cloche. Cette caractéristique est particulièrement importante dans le cas d'un travail d'une préparation légèrement épaisse. En outre, le fait que les bords des faces de travail des pales 22 sont proches de la paroi interne de la cloche 6 permet de créer un effet d'aspiration qui améliore l'agitation de la préparation.

Selon l'invention, cette pale d'agitation 22 comporte au moins un élément de travail comprenant deux faces de travail 23a, 23d situées dans un plan Po sensiblement parallèle au plan Pa contenant l'axe de rotation X. Ce plan Po peut être strictement parallèle au plan Pa contenant l'axe de rotation X ou bien confondu avec ledit plan Pa. Le plan Po peut aussi être approximativement parallèle au plan Pa, c'est-à-dire qu'un faible angle aigu peut exister entre le plan Po contenant les faces de travail et le plan Pa contenant l'axe de rotation X. L'angle limite entre les plans Po et Pa est d'environ 20° à 30°. En effet, il suffit que les faces de travail 23a, 23d de la pale d'agitation 22 soient placée longitudinalement par rapport à l'axe de rotation X pour que l'outil émulsionneur agitateur 20 de l'invention soit efficace.

Dans le mode de réalisation des figures 4 et 5, l'outil émulsionneur agitateur 20 comporte quatre faces de travail 23a, 23b, 23c et 23d situées deux par deux de part et d'autre de l'embase 21 et reliées les unes aux autres par une bague de liaison 24. Comme montré sur la figure 4, chaque élément de travail de la pale d'agitation 22 comporte deux faces, respectivement, 23a, 23d et 23b, 23c puisque la pale d'agitation 22 est mobile dans les deux sens de rotation (horaire et anti horaire). Autrement dit, chaque élément de travail de la pale d'agitation 22 comporte une face recto 23a, 23b et une face verso 23c, 23d. Dans le mode de réalisation de la figure 5, les faces de travail 23a/23d et 23b/23c sont positionnées dans la continuité les unes des autres. Dans un autre mode de réalisation (par exemple sur la figure 4) les faces 23a/23d et 23b/23c sont parallèles mais décalées les unes des autres. Elles sont alors situées toutes deux dans le même plan Po. Dans une variante, les faces de travail 23a/23d et 23b/23c ne sont pas alignées et forment un angle non plat. Dans ce cas, au moins une face recto et une face verso de travail sont situées dans le plan Po parallèle au plan Pa de l'axe de rotation. Dans une autre variante, l'outil émulsionneur agitateur 20 comporte plusieurs faces de travail 26, par exemple six réparties deux par deux autour de l'axe de rotation X. Dans ce cas, au moins une des faces de travail est située dans le plan Po parallèle au plan Pa de l'axe de rotation.

L'outil émulsionneur agitateur tel que décrit précédemment peut être fabriqué en métal ou en matière plastique. En fonction du matériau, il peut être constitué de plusieurs pièces (notamment pale d'agitation, embase et bague de liaison) ou être monobloc. Dans le cas d'une réalisation en plusieurs pièces, la liaison entre les pièces peut être réalisée par différents moyens (rivetage, soudure, collage, etc.)

Comme on le voit sur les figures 3 et 5, les faces de travail 23 de l'outil émulsionneur agitateur de l'invention sont constituées par les plus grandes surfaces de la pale d'agitation 22, c'est-à-dire par la surface longitudinale S1 de chaque face de travail 23. Ce sont ces surfaces longitudinales S1, par opposition aux surfaces radiales S2 formant les champs de la pale d'agitation 22, qui assurent le brassage de la préparation alimentaire. On comprend alors que plus la surface longitudinale S1 est grande, plus la quantité d'aliment entraînée est grande, ce qui a pour effet d'offrir un meilleur résultat qualitatif, en volume et en résultat d'émulsion ou de transformation en mousse, et un résultat plus rapide.

Dans le mode de réalisation des figures 3, 4 et 5, les faces de travail 23 sont planes. Toutefois, pour améliorer encore l'efficacité de l'outil émulsionneur agitateur, les faces de travail 23 peuvent être ondulées ou incurvées. Dans ce cas, les faces de travail 23 ont sensiblement une forme de cuillère. L'incurvation des faces de travail 23 permet de créer un mouvement de tourbillon au sein de la préparation alimentaire.

Qu'elles soient incurvées ou planes, les faces de travail 23 sont ajourées. Cet ajourage permet d'accroitre l'effet de brassage de chaque face de travail et améliore également l'intégration de l'air dans la préparation de mousse.

Dans l'exemple de la figure 5, et selon l'invention, chaque face de travail 23a et 23b comporte à la fois des ajourages radiaux 26a et des ajourages longitudinaux 27a de sorte que chaque face de travail 23 a une forme en double E ou en double peigne : un premier E ou un premier peigne présentant des jambes ou dents radiales 26b et un second E ou un second peigne présentant des jambes ou dents longitudinales 27b.

On comprend de ce qui précède que les faces de travail de l'outil émulsionneur agitateur sont réalisées de façon à brasser un volume maximum de préparation alimentaire. Pour cela, il est nécessaire que la vitesse de rotation de l'outil émulsionneur agitateur soit élevée, cette vitesse variant environ entre 100 et 12 000 tr/min ou même plus pour les versions professionnelles des mixers plongeants. Le bloc moteur 2 est donc dimensionné de façon à assurer l'entraînement de l'outil émulsionneur agitateur 20 à ces vitesses.

## Revendications

1. Outil émulsionneur agitateur (20) pour appareil de préparation alimentaire, comportant :
- une embase (21) configurée pour être entraînée en rotation autour d'un axe de rotation (X), et
- au moins une pale d'agitation (22) fixée sur l'embase,
**caractérisé en ce que** la pale d'agitation (22) comporte au moins un élément de travail comportant deux faces de travail (23a, 23b, 23c, 23d) situées dans un plan (Po) sensiblement parallèle à un plan (Pa) contenant l'axe de rotation, chaque face de travail de la pale d'agitation ayant une forme en double peigne, un premier peigne ayant des dents radiales et un second peigne ayant des dents longitudinales.

2. Outil émulsionneur agitateur selon la revendication 1, **caractérisé en ce que** la pale d'agitation (22) comporte deux éléments de travail, chacun comportant respectivement deux faces de travail (23a, 23b, 23c, 23d), lesdites faces de travail étant reliées deux par deux par l'intermédiaire d'une bague de liaison (24) montée autour de l'embase (21).

3. Outil émulsionneur agitateur selon l'une des revendications 1 ou 2, **caractérisé en ce que** les faces de travail (23) de la pale d'agitation sont planes.

4. Outil émulsionneur agitateur selon l'une des revendications 1 ou 2, **caractérisé en ce que** les faces de travail (23) de la pale d'agitation sont incurvées ou ondulées.

5. Mixeur plongeant pour préparation alimentaire comportant :
- un outil rotatif de travail de la préparation alimentaire,
- un pied d'entraînement (3) traversé par un arbre suivant l'axe de rotation (X) et sur lequel est monté de façon solidaire l'outil rotatif, et
- un bloc moteur (2) configuré pour entraîner l'arbre du pied d'entraînement (3) en rotation,
**caractérisé en ce que** l'outil rotatif est un outil émulsionneur agitateur (20) conforme à l'une des revendications 1 à 4.

6. Mixeur plongeant selon la revendication 5, **caractérisé en ce que** le pied d'entraînement (3) comporte, à une extrémité inférieure (3b), un embout (6) en forme de cloche entourant au moins partiellement l'outil émulsionneur agitateur (20) pour protéger ledit outil et améliorer l'aspiration.

7. Mixeur plongeant selon l'une des revendications 5 à 6, **caractérisé en ce que** le bloc moteur (2) est configuré pour entraîner l'arbre du pied d'entraînement (3) à une vitesse variant d'environ 100 à 12 000 tr/min.

## Patentansprüche

1. Aufschäum-Rührwerk-Werkzeug (20) für ein Gerät zur Zubereitung von Nahrungsmitteln, welches aufweist:
- einen Ansatz (21), der konfiguriert ist, um rund um eine Drehachse (X) in Drehung angetrieben zu sein, und
- mindestens ein Rührblatt (22), das an dem Ansatz befestigt ist,
**dadurch gekennzeichnet, dass** das Rührblatt (22) wenigstens ein Arbeitselement, umfassend zwei Arbeitsflächen (23a, 23b, 23c, 23d), aufweist, die in einer Ebene (Po) angeordnet sind, die deutlich parallel zu einer Ebene (Pa) ist, die die Drehachse enthält, wobei jede Arbeitsfläche des Rührblatts eine Doppelkammform besitzt, wobei ein erster Kamm radiale Zähne besitzt und ein zweiter Kamm längliche Zähne besitzt.

2. Aufschäum-Rührwerk-Werkzeug nach Anspruch 1, **dadurch gekennzeichnet, dass** das Rührblatt (22) zwei Arbeitselemente umfasst, von denen jedes jeweils zwei Arbeitsflächen (23a, 23b, 23c, 23d) umfasst, wobei die genannten Arbeitsflächen paarweise durch einen Verbindngsring (24) verbunden sind, der um den Ansatz (21) herum montiert ist.

3. Aufschäum-Rührwerk-Werkzeug nach einem der Ansprüche 1 oder 2, **dadurch gekennzeichnet, dass** die Arbeitsflächen (23) des Rührblattseben sind.

4. Aufschäum-Rührwerk-Werkzeug nach einem der Ansprüche 1 oder 2, **dadurch gekennzeichnet, dass** die Arbeitsflächen (23) des Rührwerks gekrümmt oder wellig sind.

5. Stabmixer zur Nahrungsmittelzubereitung, welcher aufweist:
- ein Arbeitsdrehwerkzeug zur Nahrungsmittelzubereitung,
- einen Antriebsfuß (3), der entlang der Drehachse (X) von einer Welle durchquert wird und auf dem das Drehwerkzeug in einer festen Form montiert ist, und
- einen Motorblock (2), der konfiguriert ist, um die Welle des Antriebsfußes (3) in Drehung zu versetzen,
**dadurch gekennzeichnet, dass** das Drehwerkzeug ein Aufschäum-Rührwerk-Werkzeug (20) nach einem der Ansprüche 1 bis 4 ist.

6. Stabmixer nach Anspruch 5, **dadurch gekennzeichnet, dass** der Antriebsfuß (3) an einem unteren Ende (3b) ein Endstück (6) in Form einer Glocke aufweist, welche das Aufschäum-Rührwerk-Werkzeug (20) zumindest teilweise umgibt, um das Werkzeug zu schützen und das Ansaugen zu verbessern.

7. Stabmixer nach einem der Ansprüche 5 bis 6, **dadurch gekennzeichnet, dass** der Motorblock (2) konfiguriert ist, um die Welle des Antriebsfußes (3) mit einer Geschwindigkeit anzutreiben, die zwischen etwa 100 und 12.000 U/Min. variiert.

## Claims

1. Emulsifier-stirrer tool (20) for a food preparation instrument, which comprises:
- a baseplate (21) configured to be rotationally driven around an axis of rotation (X); and
- at least one stirring blade (22) attached on the baseplate,
**characterized in that** the stirring blade (22) comprises at least one working element comprising two working surfaces (23a, 23b, 23c, 23d) positioned in a plane (Po) substantially parallel to a plane (Pa) containing the axis of rotation, each working surface of the stirring blade having a double "E" shape, a first "E" having radial teeth and a second "E" having longitudinal teeth.

2. Emulsifier-stirrer tool according to claim 1, **characterized in that** the stirring blade (22) comprises two working elements, each comprising respectively two working surfaces (23a, 23b, 23c, 23d), said working surfaces being connected two by two by means of a connection ring (24) mounted around the baseplate (21).

3. Emulsifier-stirrer tool according to one of claims 1 or 2, **characterized in that** the working surfaces (23) of the stirring blade are flat.

4. Emulsifier-stirrer tool according to one of claims 1 or 2, **characterized in that** the working surfaces (23) of the stirring blade are curved or undulated.

5. Hand blender for food preparation comprising:
- a rotating working tool for food preparation;
- a driver foot (3) traversed by a shaft along the axis of rotation (X) and on which the rotating tool is integrally mounted; and
- a motor unit (2) configured to drive the shaft of the driver foot (3) in rotation,
**characterized in that** the rotating tool is an emulsifier-stirrer tool (20) conforming to one of claims 1 to 4.

6. Hand blender according to claim 5, **characterized in that** the driver foot (3) comprises, at a lower extremity (3b), a bell-shaped end-fitting (6) at least partially surrounding the emulsifier-stirrer tool (20) to protect said tool and improve aspiration.

7. Hand blender according to one of claims 5 or 6, **characterized in that** the motor unit (2) is configured to drive the shaft of the driver foot (3) at a variable speed of about 100 to 12,000 rpm.
